# EUROPÄISCHE PATENTSCHRIFT

(11) **EP 4 053 650 B1**
(45) Veröffentlichungstag und Bekanntmachung des Hinweises auf die Patenterteilung: **06.09.2023**
(21) Anmeldenummer: 21159819.8
(22) Anmeldetag: 01.03.2021
(51) Int. Cl.: G05B 13/02, G05B 19/418, B65G 47/26, B65G 43/08, B65G 43/10

(54) **COMPUTERIMPLEMENTIERTES VERFAHREN, VORRICHTUNG ZUR DATENVERARBEITUNG UND COMPUTERSYSTEM ZUM ANSTEUERN EINER REGELUNGSEINRICHTUNG EINES FÖRDERSYSTEMS**
COMPUTER IMPLEMENTED METHOD, DATA PROCESSING APPARATUS AND COMPUTER SYSTEM FOR CONTROLLING A CONTROLLER OF A CONVEYOR SYSTEM
PROCÉDÉ MIS EN UVRE PAR ORDINATEUR, DISPOSITIF DE TRAITEMENT DES DONNÉES ET SYSTÈME INFORMATIQUE PERMETTANT DE COMMANDER UN DISPOSITIF DE RÉGULATION D'UN SYSTÈME DE TRANSPORT

(43) Veröffentlichungstag der Anmeldung: 07.09.2022
(73) Patentinhaber: Körber Supply Chain Logistics GmbH, 78467 Konstanz (DE)
(72) Erfinder: OTTE, Dr. Clemens, 81739 München (DE); HEIN, Dr. Daniel, 81549 München (DE); WEBER, Dr. Marc Christian, 80339 München (DE); ZETTLER, Michael, 78476 Allensbach (DE); PFEIFFER, Dr. Frank, 78479 Reichenau (DE); SCHALL, Martin, 78467 Konstanz (DE)
(74) Vertreter: Müller Schupfner & Partner Patent- und Rechtsanwaltspartnerschaft mbB

(56) Entgegenhaltungen:
- EP-A1- 3 287 396
- EP-A1- 3 715 287
- EP-A2- 3 153 242
- US-A1- 2016 239 000

## Beschreibung

Die vorliegende Erfindung betrifft das technische Gebiet der Fördersysteme für Stückgüter, insbesondere von Fördersystemen, die sich zur Vereinzelung (Singulation) und/oder Ausrichtung der Stückgüter eignen.

Im Logistikbereich werden Singulatoren eingesetzt, um einen ankommenden Strom von vielen ungeordneten Stückgütern, insbesondere Postsendungen wie Päckchen und Pakete oder Gepäckstücke, zu vereinzeln, d.h. einen definierten Abstand zwischen einzelnen Paketen herzustellen, sowie häufig auch um eine bestimmte Ausrichtung der Stückgüter zu gewährleisten. Dies ist notwendig, um in nachgelagerten Prozessschritten die Stückgüter verarbeiten zu können, z.B. zum Scannen von Adressen. Ein weiteres Ziel ist die Maximierung des Durchsatzes (Pakete/Stunde) unter Einhaltung einer bestimmten Regelungsgüte (Abstände und Ausrichtung) sowie eventuell weiterer Nebenbedingungen wie Reduzierung Stromverbrauch und Verschleiß.

Es existieren Singulatoren mit parallel verlaufenden Förderstrecken, die jeweils eine Mehrzahl hintereinander angeordneter Förderelemente aufweisen, bei denen die Position und Ausrichtung der Stückgüter mit Sensoren (z.B. Kameras) überwacht wird. Ein Singulator wird von einer Regelungseinrichtung angesteuert. Stückgüter, die als ungeordneter Stückgutstrom auf den Singulator eingebracht werden, sollen von den Förderelementen transportiert und währenddessen in definierte Abstände vereinzelt und ausgerichtet werden. Die Förderbänder aller Förderelemente sind separat ansteuerbar, wobei die Sollwerte für die Geschwindigkeiten von einer Steuerung vorgegeben werden. Die Regelungsvorgänge werden unter Versuchsbedingungen, vor der Installation beim Endkunden, mit einem Standardgüterstrom mit einer bestimmten festen Verteilung von Stückguteigenschaften eingestellt. Je nach aktueller, von den Sensoren eingefangenen Anordnung der Stückgüter auf dem Fördersystem, wird die für diese Anordnung vorbestimmte, individuelle Ansteuerung der Fördergeschwindigkeiten aller Förderelemente von der Steuerung ausgewählt und die Förderelemente demensprechend angesteuert, d.h. die Förderelemente unterschiedlich beschleunigt und verzögert. Das optimale, manuelle oder manuell-unterstützte Einstellen dieser Regelungsvorgänge ist sehr aufwändig, denn um ein effizientes Vereinzeln und Anordnen zu erzielen, müssen die Geschwindigkeiten der Förderelemente mit sehr hohem Takt (z.B. 30ms) neu eingestellt werden.

Zudem ist diese Voreinstellung der Regelungsvorgänge nur dann sehr effizient und zuverlässig für die Vereinzelung und Ausrichtung, wenn die tatsächlich auf dem Fördersystem transportierten Stückgüter ähnliche Eigenschaften (Gewichtsverteilung, Reibungseigenschaften, Grösse, Form, Material, ...) wie die für die Voreinstellung verwendeten Standardgüter aufweisen. Wenn jedoch das Gutspektrum andere Eigenschaften aufweist als die Standardgüter (z.B. mehr glatte, rutschige Plastikpäckchen anstelle von griffigen Kartonpaketen oder - päckchen) reagieren die Stückgüter nicht wie die Standardgüter auf eine Änderung der Parameter. Diese Eigenschaften sind dabei nicht notwendigerweise direkt im Kameraabbild beobachtbar, beeinflussen jedoch die Dynamik, z.B. durch eine veränderte Totzeit bei Geschwindigkeitsänderungen. Anpassungen an kundenspezifische Situationen nach Inbetriebnahme sind schwierig, insbesondere wenn sich die Eigenschaften des Stückgutstroms beim jeweiligen Kunden nach Inbetriebnahme der Anlage über die Zeit noch verändern.

Bisher wurde das Problem gelöst durch eine Kombination von klassischer Bildverarbeitung und manuellem Reglerentwurf, d.h. einem Erkennen der Pakete im Kamerabild, Überführung in eine interne Darstellung (z.B. Polygone) und manuellem Entwurf eines geeigneten Reglers, z.B. eines PID-Reglers unter Annahme einer bestimmten erwarteten statistischen Verteilung des Paketstroms. In der Regel werden auch Simulationen zu Hilfe genommen. Häufig wird das Problem vereinfacht, indem der Regler sich auf das jeweils vorderste Paket eines Stückgutstroms konzentriert und andere Pakete zunächst nicht beachtet, was aber die Regelungsgüte reduzieren kann.

Aufgrund der hohen Anzahl an Förderelementen ist die Steuerung regelungstechnisch aufwändig, denn die Dimensionalität dieser Regelungsproblematik entspricht der Anzahl Förderelementen des Fördersystems. Die Anpassung der Regelungsvorgänge basierend von bereits eingestellten Singulatoren auf weitere Singulatoren mit unterschiedlicher Anzahl und Länge von Förderelementen ist komplex. Die Kombination aus hohem Takt und hoher Dimensionalität erlaubt keine normalen Methoden des maschinellen Lernens, welche sich auf den tatsächlichen Stückgutstrom einstellen können. EP 3 287 396 A1 offenbart ein Fördersystem zum Transport von Stückgütern mit einer Steuerung der Abstand zwischen Stückgütern. Ein iterativer lernfähiger Algorithmus wird zur Detektierung der Position der Objekte benutzt.

Der vorliegenden Erfindung liegt daher die Aufgabe zugrunde, ein Verfahren und eine Vorrichtung bereitzustellen, welche gegenüber dem Stand der Technik eine Verbesserung bietet. Diese Aufgabe wird durch die in den unabhängigen Ansprüchen beschriebenen Lösungen gelöst. Vorteilhafte Ausgestaltungen ergeben sich aus den abhängigen Ansprüchen.

Die erfindungsgemäße Lösung sieht ein computerimplementiertes Verfahren zum Ansteuern einer Regelungseinrichtung eines Fördersystems zum Transport von Stückgütern mindestens einer Art, insbesondere Postsendungen und Gepäckstücke, vor. Das Fördersystem weist eine Mehrzahl entlang und parallel zu einer Förderrichtung ausgerichtete Förderelemente auf, die Förderelemente werden unter Steuerung der Regelungseinrichtung von einem jeweils zugeordneten Antrieb mit individuell einstellbarer Geschwindigkeit angetrieben, um eine Ausrichtung und/oder einen definierten Abstand der Stückgüter zu erzielen. Das Ansteuern der Regelungseinrichtung wird bestimmt durch mindestens einen nach Methoden des bestärkenden Lernens (Reinforcement Learning) handelnden oder vorbestimmten Agenten, welcher gemäß einer Strategie situativ für einen Ausgangszustand eine Aktion aus einem Aktionsraum wählt, um in einen Folgezustand zu gelangen, wobei die Zustände mit Zustandsvektoren und die Aktionen mit Aktionsvektoren abbildbar sind. Das Verfahren umfasst die Verfahrensschritte:
a) Erstellen eines Ausgangsabbilds des Fördersystems.
b) Für jedes der Stückgüter auf dem Abbild individuelles Erstellen eines Zustandsvektors vorab festgelegter, somit vorbestimmter, und für alle Stückgüter einer Art gleicher Dimension, umfassend dem unmittelbar zuvor erstellten Abbild (Anfangs- bzw. Folgeabbild) entnommene Zustandsinformationen des betreffenden Stückguts.
c) Für jedes Stückgut individuelles Auswählen eines Aktionsvektors aus einem Aktionsraum gemäß der für alle Stückgüter einer Art gleichen Strategie (Policy) für den aktuellen Zustandsvektor dieses Stückguts, wobei die Dimension des Aktionsvektors vorbestimmt ist.
d) Für jedes Stückgut Abbilden des Aktionsvektors auf die realen Förderelemente dieses Stückguts, um die Geschwindigkeit dieser Förderelemente zu bestimmen, und entsprechende Ansteuerung der Förderelemente, also eine Einstellung der Geschwindigkeit der Antriebe dieser Förderelemente, mit der Regelungseinrichtung.
e) Nach Ablauf einer Taktzeit Erstellen eines Folgeabbilds des Fördersystems und Durchführen von Verfahrensschritt b) um für jedes Stückgut einen Zustandsvektor des Folgezustands (Folgezustandsvektor) zu erhalten.
f) Falls die Strategie für Stückgüter (4) einer Art während der Durchführung des Verfahrens weiter trainiert werden soll wird für jedes Stückgut dieser Art durch eine Methode des bestärkenden Lernens der Zustandsvektors des Folgezustands anhand einer Belohnung bewertet, woraufhin der Agent seine Strategie für Stückgüter (4) dieser Art trainiert und somit optimiert, indem er die Aktionsvektoren des Aktionsraums anpasst.
g) Für jedes Stückgut erneutes Durchführen der Verfahrensschritte c) - f) unter Heranziehen der verbesserten oder vorbestimmten Strategie solange das betreffende Stückgut auf dem Folgeabbild abgebildet ist. Für neu auf dem Abbild auftauchende Stückgüter wird das Verfahren ebenfalls durchgeführt.

Die erfindungsgemäße Lösung betrifft eine Vorrichtung zur Datenverarbeitung für eine computer-implementierten Ansteuerung einer Regelungseinrichtung eines Fördersystems zum Transport von Stückgütern mindestens einer Art, insbesondere Postsendungen und Gepäckstücke. Das Fördersystem weist eine Mehrzahl entlang und parallel zu einer Förderrichtung ausgerichtete Förderelemente auf, wobei die Förderelemente unter Steuerung der Regelungseinrichtung von einem jeweils zugeordneten Antrieb mit individuell einstellbarer Geschwindigkeit angetrieben werden, um eine Ausrichtung und/oder einen definierten Abstand der Stückgüter zu erzielen. Das Ansteuern der Regelungseinrichtung wird bestimmt durch mindestens einen nach Methoden des bestärkenden Lernens handelnden Agenten, welcher gemäß einer Strategie für Stückgüter einer Art situativ für einen Ausgangszustand eine Aktion aus einem Aktionsraum wählt, um in einen Folgezustand zu gelangen, wobei die Zustände mit Zustandsvektoren und die Aktionen mit Aktionsvektoren abbildbar sind, wobei die Stückgüter auf dem Fördersystem von mindestens einem Sensor erfassbar sind und die Regelungseinrichtung eine Recheneinheit umfasst. Die Vorrichtung umfasst Mittel zur Durchführung des erfindungsgemäßen Verfahrens.

Die erfindungsgemäße Lösung betrifft zudem ein Fördersystem zum Transport von Stückgütern mindestens einer Art, insbesondere Postsendungen und Gepäckstücke, welches eine Mehrzahl entlang und parallel zu einer Förderrichtung ausgerichtete Förderelemente aufweist. Die Förderelemente werden unter Steuerung einer Regelungseinrichtung von einem jeweils zugeordneten Antrieb mit individuell einstellbarer Geschwindigkeit angetrieben, um eine Ausrichtung und/oder einen definierten Abstand der Stückgüter zu erzielen. Das Ansteuern der Regelungseinrichtung wird bestimmt durch mindestens einen nach Methoden des bestärkenden Lernens handelnden Agenten, welcher gemäß einer für alle Stückgüter einer Art gleichen Strategie situativ für einen Ausgangszustand eine Aktion aus einem Aktionsraum wählt, um in einen Folgezustand zu gelangen, wobei die Zustände mit Zustandsvektoren und die Aktionen mit Aktionsvektoren abbildbar sind, umfassend eine erfindungsgemäße Vorrichtung.

Die erfindungsgemäße Lösung betrifft zudem ein Computerprogramm umfassend Befehle, die bei der Ausführung durch eine mit einem erfindungsgemäßen Fördersystem verbundene Recheneinheit diese veranlassen, das erfindungsgemäße Verfahren auszuführen.

Die Vorrichtung, das Fördersystem und das Computerprogramm weisen, soweit übertragbar, die gleichen Vorteile auf, welche bezüglich des vorgestellten Verfahrens aufgeführt sind.

So sind Verfahrensmerkmale auch als Eigenschaft der entsprechenden Vorrichtungseinheit gegenständlich formuliert zu sehen und umgekehrt.

Das Anwenden einer Methode des bestärkenden Lernens zugleich auf alle Stückgüter (einer Art) und alle Förderelemente eines Fördersystems ist ein hochdimensionales Problem, denn für jede Taktzeit muss für jedes Förderelement eine Geschwindigkeit individuell bestimmt werden. Dies ist ab einer gewissen Anzahl an Förderelementen nicht innerhalb der in Fördersystemen wie Singulatoren typischen Taktzeit (z.B. 30ms) lösbar. Durch das Zergliedern des Regelungsproblems aller Förderelemente in lokale Aktionsvektoren eines Stückguts, wird die Dimensionalität so sehr reduziert, dass eine Recheneinheit in der Lage ist, eine Methode des bestärkenden Lernens innerhalb der erforderlichen Taktzeit auf diese Vielzahl von niedrig dimensionalen und somit weniger komplexen Problemen anzuwenden. Durch die Vorab-Festlegung der Dimension der Zustandsvektoren aller Stückgüter ist die Dimension jedes Zustandsvektors vorbestimmt und die Dimension der Zustandsvektoren aller Stückgüter stimmt überein. Zudem ist die Dimension der Aktionsvektoren ab einer gewissen Anzahl an Förderelementen des Fördersystems geringer als die Anzahl an Förderelementen. Der Aktionsvektor repräsentiert die verfügbare Motorik der Förderelemente und es erfolgt keine Änderung, wenn ein Stückgut bereits perfekt ausgerichtet und in gewünschten Abstand zu den Nachbarstückgütern vorliegt. In diesem Fall können die Aktionsvektoren gemäß einer Ausführung mit Standardwerten des Fördersystems vorbelegt werden. Der Agent (jeder Stückgutart) erhält zudem nicht nur eine Belohnung für jede Taktzeit, sondern für jede Taktzeit ebenso viele Belohnungen wie sich zu singulierende Stückgüter einer Art auf den Förderelementen befinden. Die Anzahl der Stückgüter und die Anzahl an Arten von Stückgütern ändert nichts am Verfahrensprinzip. Der Agent lernt daher schneller, da mit nur einem Durchgang die Strategie nicht nur einmal, sondern der Anzahl Stückgüter entsprechend trainiert und somit schneller optimiert wird. Dadurch kann sich das Verfahren besonders schnell auf einen sich verändernden Stückgutstrom einstellen.

Durch das Einstellen der Geschwindigkeit wird ein Förderelement über seinen Antrieb beschleunigt oder verzögert, wodurch die Förderelemente die Ausrichtung und die Lage des auf ihnen aufliegenden Stückguts verändern. Vor dem Start des Verfahrens können allen Förderelementen des Stückguts Standardwerte zugewiesen werden. Die Abbilder werden erhalten über ein Kameraabbild (Bildsensor) und/oder über andere Sensoren zur Lage- und Positionsbestimmung der Stückgüter und in ein durch Zustandsvektoren beschreibbares Abbild überführt.

Gemäß einer Ausführungsform kann erfolgen ein Zuordnen der Stückgüter auf dem Abbild zu einer ersten und mindestens einer weiteren Art in Abhängigkeit von Eigenschaften der Stückgüter und für jede zugeordnete Art ein Bereitstellen eines Agenten mit einer Strategie für Stückgüter dieser Art. Wenn für alle Stückgüter auf dem Abbild dieselbe Strategie herangezogen wird, gehören alle Stückgüter einer Art an und es erfolgt keine Zuordnung der Stückgüter. Wenn jedoch leicht zu unterscheidende Arten von Stückgütern (z.B. Kartonpakete als Stückgüter erster Art und Plastiktaschen-Päckchen als Stückgüter zweiter Art; feste Koffer als Stückgüter erster Art und flexible Reisetaschen als Stückgüter zweiter Art; ...) auf demselben Fördersystem transportiert werden, so weisen diese Stückgüterarten unterschiedliche Haftungs- und Reibungseigenschaften auf. Diese Stückgüterarten reagieren selbst bei gleichem Anfangszustand (gleiche Ausrichtung, gleiche Auflagefläche auf denselben Förderelementen) unterschiedlich auf eine gemäß den Aktionsvektoren ausgewählte Ansteuerung der Förderelemente, d.h. sie gelangen selbst bei identischer Ansteuerung derjenigen Förderelemente, auf denen sie aufliegen, in einen unterschiedlichen Folgezustand. Dieser Folgezustand wird sich zwar nicht stark unterscheiden, dennoch kann es sinnvoll sein, für diese unterschiedlichen Stückgüterarten unterschiedliche Strategien heranzuziehen. Das Fördersystem kann die Art der Stückgüter bestimmen, z.B. anhand des Abbilds, und dann jeder zugeordneten Stückgutart eine eigene Strategie zuweisen, d.h. Strategie eins für Kartonpakete und Strategie zwei für Plastiktaschenpäckchen sowie allfällige weitere Strategien für weitere Stückgutarten.

Gemäß einer Ausführungsform kann für jede Taktzeit und für jedes Stückgut ein Bestimmen der Geschwindigkeiten derjenigen Förderelemente, auf denen das Stückgut aufliegt, aber auf die kein Aktionsvektor dieses Stückguts abgebildet worden ist, und eine entsprechende individuelle Ansteuerung ebendieser Förderelemente mit der Regelungseinrichtung erfolgen. Die Geschwindigkeiten können bestimmt werden über Interpolation der Geschwindigkeiten von denjenigen benachbarten Förderelementen, auf die ein Aktionsvektor dieses Stückguts abgebildet worden ist. So wird das Problem gelöst, dass die Dimensionalität des Aktionsvektors nicht notwendigerweise übereinstimmt mit der Anzahl an Förderelementen, auf denen das Stückgut aufliegt. Für diese Interpolationsaufgabe eignet sich z.B. bilineare Interpolation.

Gemäß einer Ausführungsform kann für jede Taktzeit, also immer gleichzeitig mit dem Bestimmen der Geschwindigkeiten der Aktionsförderelemente, ein Bestimmen der Geschwindigkeiten aller derjenigen Förderelemente erfolgen, auf denen sowohl kein Stückgut aufliegt, als auch auf die kein Aktionsvektor eines Stückguts abgebildet worden ist, und entsprechende individuelle Ansteuerung ebendieser Förderelemente mit der Regelungseinrichtung. Die Geschwindigkeiten können bestimmt werden über Interpolation, z.B. bilineare Interpolation, der Geschwindigkeiten von denjenigen benachbarten Förderelementen, auf die ein Aktionsvektor eines Stückguts abgebildet worden ist. Für Rand-Förderelemente können spezielle Randbedingungen angenommen werden. Zusätzlich oder alternativ können die Geschwindigkeiten bestimmt werden anhand von Geschwindigkeitsparametern des Fördersystems. Dies können Standardwerte aus Installation oder Simulation, z.B. Mittelwert aller Aktionsvektor-Förderelemente, sein. Zusätzlich oder alternativ können die Geschwindigkeit von den Förderelementen, auf deren benachbarten Förderelementen der Aktionsvektors eines Stückguts abgebildet worden ist, so gewählt werden, dass sie mit der Geschwindigkeit dieses benachbarten Förderelements übereinstimmen. Zusätzlich oder alternativ können die Geschwindigkeiten für einige oder alle dieser Förderelemente identisch sein und bestimmt werden aus dem Mittelwert der Geschwindigkeiten der Förderelemente, auf die ein Aktionsvektor eines Stückguts abgebildet worden ist. Durch das Antreiben von auch denjenigen Förderelementen, auf denen in diesem Moment kein Stückgut aufliegt, müssen diese nicht von null beschleunigt werden, wenn auf sie in der nächsten Taktzeit eine Geschwindigkeit des Aktionsvektors abgebildet wird. Eine Ansteuerung dieser Förderelemente ist auch dann sinnvoll, da ein Stückgut während der Taktzeit auf eines oder mehrere dieser Förderelemente transportiert werden kann.

Gemäß einer Ausführungsform können die in dem Zustandsvektor abgebildeten Zustandsinformationen eines Stückguts umfassen Position und/oder Ausrichtung.

Gemäß einer Ausführungsform können die in dem Zustandsvektor abgebildeten Zustandsinformationen oder anderweitig abgebildeten Zustandsinformationen eines Stückguts zudem umfassen Überlapp des Stückguts mit denjenigen Förderelementen, auf denen das Stückgut aufliegt und/oder Zustandsinformationen einer vorbestimmten Anzahl nächster benachbarter Stückgüter innerhalb eines vorbestimmten Abstands, zumindest umfassend deren Position und/oder Abstand zum Stückgut des Zustandsvektors, wobei bei einer geringeren Anzahl als der vorbestimmten Anzahl nächster benachbarter Stückgüter der Zustandsvektor mit Standardwerten belegt wird; und/oder Geschwindigkeit und/oder Größe des Stückguts; und/oder globale Zustandsinformationen des Fördersystems, beispielsweise umfassend eine Anzahl Stückgüter auf dem Fördersystem, Durchschnittsgeschwindigkeit des Fördersystems, Priorisierung einzelner Stückgüter, beispielsweise anhand von Größe und/oder Sortierkriterium. Die Standardwerte können z.B. virtuelle, bereits perfekt ausgerichtete Stückgüter in gewünschtem Abstand abbilden, so dass diese virtuellen Stückgüter möglichst keinen störenden Einfluss auf die Regelung des betrachteten Stückguts haben.

Die tatsächliche Anzahl der Bänder, auf denen ein Stückgut aufliegt, variiert je nach Größe und Ausrichtung des Stückguts. Die Aktionsvektoren haben jedoch eine konstante Dimension. Um diese Problematik aufzulösen, kann der Aktionsvektor nur Geschwindigkeiten beschreiben, die unter vorbestimmten Punkten oder Flächenbereichen des Stückguts liegen. Gut als vorbestimmte Punkte eigenen sich beispielsweise die Eckpunkte eines umschreibenden Rechtecks und/oder ein approximierter Schwerpunkt. Die Lage und Position des Stückguts wird somit abstrahiert und bestimmt durch eine Auswahl von Auflageparametern, die derart ausgewählt werden, dass sie mit den Aktionsvektoren beeinflussbar sind. Dadurch wird das tatsächliche Stückgut hinsichtlich seiner Auflage auf dem Fördersystem stets mit einer festen Anzahl an Parametern beschrieben. Die Eigenschaften des Stückguts wurden abstrahiert in mit dem Aktionsvektor beeinflussbare Modellparameter deren Anzahl der Dimensionalität des Aktionsvektors entspricht.

Wenn die vom Agenten für zwei oder mehr Stückgüter zugeordneten Aktionsvektoren auf dasselbe Förderelemente abgebildet werden, muss entschieden werden, welchem Wert welche Priorität gegeben wird. Dieser Konflikt kann gelöst werden indem in Abhängigkeit vom jeweiligen Überlapp dieser Stückgüter mit diesem Förderelement und/oder von einer Güte der Zustandsvektoren eine Priorisierung und/oder eine gewichtete Mittelung der von den Aktionsvektoren vorgegebenen Geschwindigkeiten durchgeführt wird. Das entsprechende Förderelement wird dem Ergebnis gemäß angesteuert.

Wenn zwei Elemente des Aktionsvektors eines Stückguts auf dasselbe Förderelemente abgebildet werden, kann dieses Förderelement mit einem Mittelwert dieser Elemente angesteuert oder eines der Elemente vollumfänglich oder gewichtet bevorzugt werden.

Gemäß einer Ausführungsform kann das Abbild mit Bildverarbeitungsmethoden ausgewertet werden und die Zustandsvektoren können basierend auf dem ausgewerteten Abbild erstellt werden. Die Stückgüter werden beispielsweise mit umschreibenden Rechtecken simuliert.

Gemäß einer Ausführungsform kann ein erster Erstellversuch der Zustandsvektoren automatisch mittels Deep Reinforcement Learning aus dem Abbild erfolgen. Es kann also ein erster oder weiterer Erstellversuch der Zustandsvektoren basierend auf dem ursprünglichen Abbild erfolgen. Dabei wird die Darstellung der Zustandsvektoren also nicht vorgegeben, sondern automatisch mittels Deep Reinforcement Learning aus dem (Kamera-)Abbild gelernt; die Zustandsvektoren werden also direkt anhand der Pixelbelegung des digitalen Kameraabbilds gebildet. Wenn die Zustandsvektoren hingegen über den Zwischenschritt von auf dem Abbild durchgeführten Bildverarbeitungsmethoden bestimmt werden, werden die Zustandsvektoren durch Expertenwissen definiert, zudem wirken sich Fehler der Bildverarbeitung direkt auf die Zustandsvektoren aus. Wenn aus irgendwelchen Gründen dieser erste Erstellversuch für ein Abbild oder ein Teil eines Abbilds nicht erfolgreich ist, kann anschließend versucht werden, die Zustandsvektoren für dieses Abbild oder den Teil dieses Abbilds mit Bildverarbeitungsmethoden auszuwerten, um die Zustandsvektoren zu erhalten.

Um einen weitsichtigeren Agenten zu erhalten, kann der lernende Agent zudem seine Strategie anhand des Vergleichs der Zustandsvektoren des Anfangszustands und des Folgezustands anhand einer Belohnung optimieren und die Aktionsvektoren des Aktionsraums anpassen.

Um mit wenig Aufwand eine erste Strategie für den Agenten bereitzustellen, so dass ein Kunde bereits eine robuste Strategie und somit ein funktionierendes Fördersystem geliefert bekommt, kann ein Trainieren der Strategie des Agenten für Stückgüter einer Art mit einem virtuellen Fördersystem (und somit virtuellen Stückgütern und virtuellen Förderelementen) oder mit einem realen Fördersystem erfolgen. Wenn bereits eine vorbestimmte Strategie geliefert wird, kann zudem - beispielsweise bei sehr ähnlichem Stückgutstrom oder mangelnder Rechenkapazität des IT-Systems des Fördersystembetreibers - auf ein Trainieren der Strategie während der Durchführung des Verfahrens verzichtet werden.

Ausführungsformen der Erfindung werden nachfolgend anhand der Figuren beispielsweise näher erläutert. Dabei zeigen:
- Figur 1: ein Fördersystem in der Aufsicht;
- Figur 2: eine Auswahl möglicher Anordnungen der Förderelemente;
- Figur 3: ein Ablaufdiagramm für das Bestimmen des Aktionsvektors;
- Figur 4: das Prinzip eines bestärkenden Lernsystems;
- Figur 5: ein Stückgut mit Eckpunkten und geschätztem Schwerpunkt;
- Figur 6: exemplarisch bestimmte Geschwindigkeiten der Förderelemente, auf denen ein Stückgut aufliegt;

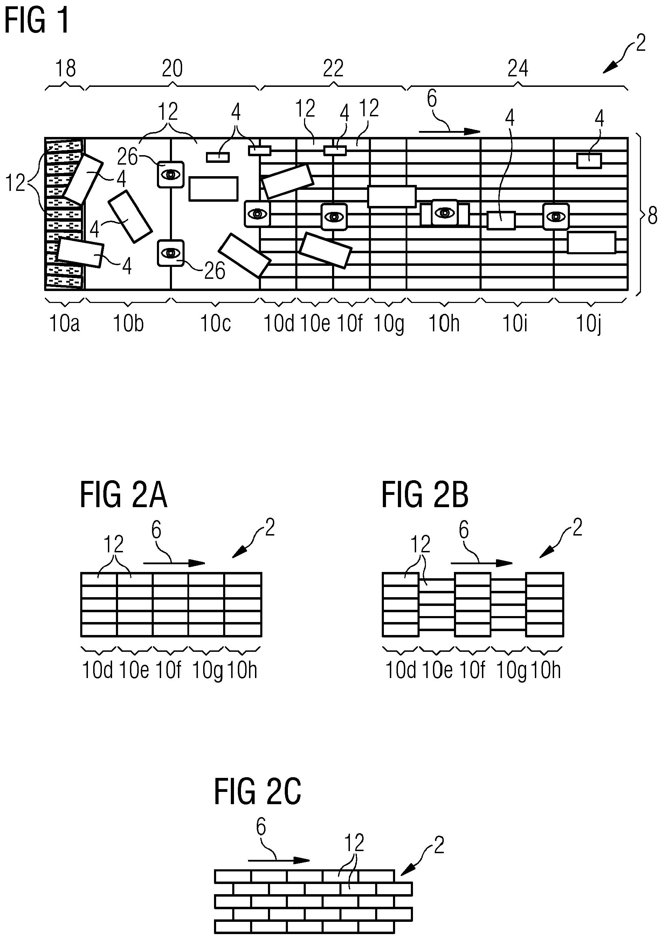

Figur 1 zeigt ein gemäßes Fördersystem 2, welches Stückgüter 4 entlang einer Hauptförderrichtung 6 auf einer Förderstrecke 8 auf Fördermitteln 12 aufliegend transportiert mit einem typischen Einsatzgebiet als Singulator 2 im postalischen und logistischen Bereich. Die Fördermittel 12 sind parallel zur Hauptförderrichtung 6 in entlang der Hauptförderrichtung 6 hintereinander angeordneten Segmenten 10 angeordnet, fluchtend und entlang einer Linie. Die Stückgüter 4 werden zum Transport von einem Segment 10 auf das jeweils nachfolgende Segment 10 übergeben und liegen auf mehreren Fördermitteln 12 zugleich auf und können daher bei individueller Ansteuerung der Fördermittel 12 durch eine hier nicht dargestellte Regelungseinrichtung während ihres Transports vereinzelt und/ oder rotiert werden, beispielsweise indem die Fördermittel 12 auf denen das betreffende Stückgut 4 aufliegt mit höherer Fördergeschwindigkeit 16 als die benachbarten Fördermittel 12 betrieben werden. Die Regelungseinrichtung umfasst hierzu eine figürlich nicht dargestellte Recheneinheit. Das Fördersystem 2 umfasst mehrere oberhalb und entlang der Förderstrecke angeordnete, als optische Detektoren ausgestaltete Sensoren 26. Aber prinzipiell können auch andere Sensortypen herangezogen werden, solange die Recheneinheit in der Lage ist, anhand des Sensorinputs die Zustandsvektoren der Stückgüter 4 zu erstellen. Ein einziger Sensor 26 kann bei gutem Blickwinkel prinzipiell bereits ausreichend sein.

Das Fördersystem 2 ist in im Wesentlichen unterschiedliche Aufgaben ausführende Segmente 18, 20, 22, 24 entlang der Hauptförderrichtung 6 untergegliedert. Zunächst wird auf einer Verbreiterungsvorrichtung 18 anhand der Anordnung der Förderelemente 12 versucht, eine Verbreiterung der Stückgutverteilung zu erzielen. Im Anschluss erfolgt auf einem Überführungsfördermittel 20 einzig ein Transport entlang der Hauptförderrichtung 6. Das Überführungsfördermittel 20 umfasst zwei Segmente 10b, 10c, die jeweils nur ein einziges, die gesamte Breite der Förderstrecke 8 umspannendes Fördermittel 12 umfassen. Für eine besonders effiziente Korrektur der Ausrichtung sind die Segmente 10d - 10h bzw. dessen Fördermittel 12 im Ausrichtungsabschnitt 22 relativ kurz.

Für eine besonders effiziente Korrektur des Abstands sind die Segmente 10d - 10h bzw. dessen Fördermittel 12 im Abstandskorrekturabschnitts 24 länger ausgestaltet als diejenigen des Ausrichtungsabschnitts 22. Es ist möglich, die Abschnitte 22, 24 des Fördersystems 2 in Sub-Fördersysteme mit unterschiedlichen Strategien (höhere Belohnung für gute Ausrichtung im Ausrichtungsabschnitts 22 bzw. für gut eingestellte Abstände im Abstandskorrekturabschnitt 24) zu unterteilen, so dass jeweils eine für den betreffenden Abschnitt 22, 24 optimierte bzw. optimierbare Strategie verwendet wird. Dieses Vorgehen der Aufteilung in unterschiedliche Abschnitte 22/24 eignet sich jedoch vor allem für Fördersysteme 2 die ohne Methoden des bestärkenden Lernens vorgehen. Gemäß einer Ausführungsform wird zudem eine Belohnung vergeben anhand eines Vergleichs der Zustandsvektoren von Anfangs- und Folgezustand sₙ(t), sₙ(t+Δt) um eine noch bessere und raschere Optimierung der Strategie zu erzielen.

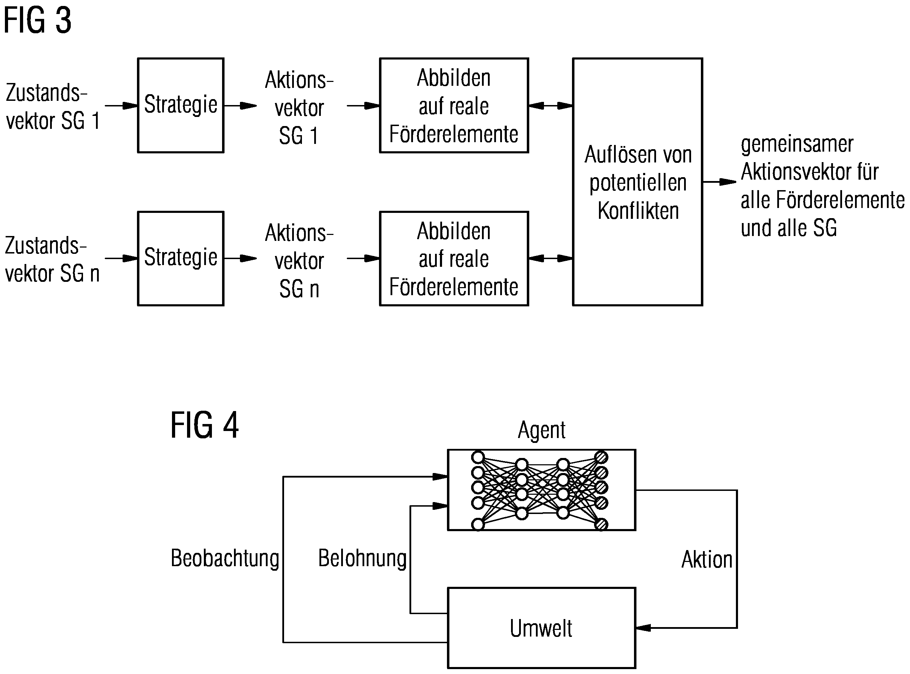

Das optimale Regelverhalten der Regelungseinrichtung des Fördersystems 2 wird maschinell gelernt mittels bestärkendem Lernen (Figur 4). Hierbei interagiert ein "Agent" mit der Umgebung, die entweder eine konkrete Anlage als Fördersystem 2, deren Simulation/digitaler Zwilling oder ein datengetrieben gelerntes Modell ("Surrogatmodell") der Anlage 2 oder Simulation sein kann. Die Aktionen, mit denen die Umgebung beeinflusst wird, sind die Geschwindigkeiten v aller Förderelemente 12 (z.B. Förderbänder) und werden als verfügbare Motorik in Aktionsvektoren aₙ(t) mit typischerweise geringerer Dimensionalität als die Anzahl Förderelemente 12 repräsentiert. Beobachtungen, die dem Agenten als Eingangsdaten zur Verfügung stehen, sind Abbilder des Fördersystems, insbesondere basierend auf Kameras 26 und/oder anderen Sensordaten und werden in Zustandsvektoren sₙ(t) dargestellt. Wenn der Zustandsvektor sₙ(t) eines Stückguts 4 bereits die erwünschte Ausrichtung und ausreichenden Abstand zu seinen benachbarten Stückgütern 4` aufweist, wird der Aktionsvektor einen einfachen Weitertransport in Förderrichtung 6 abbilden. Optimiert wird das Verhalten des Agenten anhand eines Belohnungs-(Reward)-Signals, mit der die Güte der derzeitigen Situation beschrieben wird. Im Wesentlichen wird die Güte durch die Lage/Ausrichtung und die gegenseitigen Abstände der Pakete 4 bestimmt. Beispielsweise ist der Belohnungswert hoch, wenn die Pakete 4 einen definierten Sollabstand voneinander besitzen und in einem bestimmten Winkel auf dem Fördersystem 2 bzw. dessen Förderelementen 12 liegen. Darüber hinaus können auch Stromverbrauch, Lebenszeitverbrauch, Lärmemissionen etc. als Belohnungen berücksichtigt werden.

Da die Methoden des bestärkenden Lernens, insbesondere durch ein neuronales Netz oder ein rekurrentes neuronales Netz, samt Bestimmen des Systemmodells bekannt ist, wird auf eine tiefergehende Beschreibung an dieser Stelle verzichtet. Die gängigen Methoden (z.B. NFQ, DQN, Proximal Policy Optimization), lassen sich im Grundsatz für die Erfindung verwenden.

Gemäß einer Ausführungsform erfolgt ein Zuordnen der Stückgüter 4 auf dem Abbild zu einer ersten und mindestens einer weiteren Art in Abhängigkeit von Eigenschaften der Stückgüter 4. Ein Agent wird für jede zugeordnete Stückgutart eine eigene Strategie bereitstellen. Wenn nur eine Strategie für alle Stückgüter 4 verwendet wird, muss kein Zuordnen erfolgen.

Das Zuordnen der Stückguter 4 zu einer Art erfolgt in Abhängigkeit von Eigenschaften der Stückgüter. Die Zuordnung kann anhand des Abbilds geschehen oder zuvor (z.B. an einer Sortierstation) bestimmt werden, wobei dann die einzelnen Stückgüter während des Verfahrens genau getrackt werden müssen, um die Zuordnung zu einer Stückgutart nicht zu verlieren. Mögliche, die Zuordnungen zu einer Stückgutart bestimmende Eigenschaften können sein Kategorie (Päckchen, Pakete, Großbriefe, ...), Verpackungsmaterial (Karton oder Plastik), Gewicht (da es die Haftung auf den Förderelementen beeinflusst), Größe (bestimmt, auf wie vielen Förderelementen ein Stückgut aufliegt) .... Das Fördersystem bestimmt die Art der Stückgüter 4, z.B. anhand des Abbilds oder anhand weiterer Sensoren, und weist dann jeder zugeordneten Stückgutart eine eigene Strategie zu, z.B. Strategie eins für schwere Kartonpakete und Strategie zwei für leichte Kartonpakete, Strategie drei für schwere Plastiktaschenpäckchen, Strategie vier für leichte Plastiktaschenpäckchen sowie allfällige weitere Strategie für weitere Stückgutarten.

Figur 2 zeigt nicht abschließend mögliche Anordnungen der Förderelemente 12 des Fördersystems 2. In Figur 2a sind alle Förderelemente 12 netzartig in der Art einer Matrix angeordnet. Diese Form ist am einfachsten zu beschreiben und auch das Abbilden eines Aktionsvektors aₙ(t) auf die realen Förderelemente 12 ist so besonders unkompliziert und bewirkt stets eine vergleichbare Wirkung durch die angesteuerten Förderelemente 12 als bei anderer Anordnung. Die Förderelemente 12 in Figur 2b sind segmentweise quer zur Förderrichtung 6 versetzt, so dass zwei benachbarte Förderelemente 12 jeweils in ein Förderelement 12 münden. Und in Figur 2c bilden die hintereinander entlang der Förderrichtung 6 angeordneten Förderelemente 12 jeweils durchgehende Förderstrecken, die hinsichtlich ihrer Förderelemente 12 jeweils versetzt angeordnet sind. Die Anordnung der Figuren 2b, 2c kann jedoch insbesondere für kleinere Stückgüter 4 eines Paketstroms, die sonst nur auf einem Förderelement 12 aufliegen, Vorteile bieten.

Bei einem mit dem erfindungsgemäßen Verfahren betriebenen Fördersystem 2 ist eine gleich lange Ausgestaltung aller Förderelemente 12 ohne eine Aufteilung in Abschnitte 22/24 (Figur 2a) vorteilhaft, da so alle Förderelemente 12 gleich lang sind und somit Stückgüter 4 über den gesamten Bereich gleichartig manipuliert werden.

Figur 3 zeigt ein Ablaufdiagramm für das erfindungsgemäße Bestimmen des Aktionsvektors a(t). Da für jedes Förderelement 12 eine Bandgeschwindigkeit aus einem kontinuierlichen Bereich (z.B. zwischen 0.1 m/s und 3.5 m/s) eingestellt werden muss, ist bei beispielsweise 85 Förderelementen der Aktionsraum eine Teilmenge des R^85, was weit oberhalb der mit bekannten Verfahren lernbaren Komplexität liegt (z.B. weil im Allgemeinen die Zahl der benötigten Trainingsbeispiele exponentiell mit der Dimensionalität der Datenräume zunimmt).

Daher wird nicht für das gesamte Fördersystem 2 ein Zustandsvektor s(t) erstellt, sondern anhand eines Abbilds des Sensors 26 wird für jedes Stückgut 4₁, 4ₙ ein individueller Zustandsvektor s₁(t), sₙ(t) erstellt. Die Zustandsvektoren s₁(t), sₙ(t) werden so konstruiert, dass er für jedes Stückgut 4₁, 4ₙ dieselbe Dimensionalität besitzt. Das bedeutet, dass insbesondere die Anzahl betrachteter benachbarter Stückgüter 4` konstant bleibt, indem sich zum Beispiel auf die nächsten zwei oder drei Stückgüter in einem vorbestimmten Abstand beschränkt wird. Weiter entfernte Stückgüter 4 sind für die Ausrichtung und Abstandseinstellung dieses Stückguts 4 unerheblich und müssen nicht berücksichtigt werden. Durch diese Beschränkung erhält man unabhängig von der tatsächlichen Anzahl an Stückgütern 4 einen Zustandsvektor sₙ(t) konstanter Größe. Für den Fall, dass die Gesamtzahl der tatsächlich benachbarten Stückgüter 4` geringer ist als die Anzahl betrachteter benachbarter Pakete können die entsprechenden Zustandsinformationen des Zustandsvektors sₙ(t) mit Standardwerten befüllt werden. Hier bieten sich zum Beispiel Werte an, welche von sogenannten virtuellen Stückgüter 4` mit ausreichend Abstand und perfekter Ausrichtung auf dem Band stammen. Die Werte der virtuellen Stückgüter 4` sollten so gewählt sein, dass sie möglichst keinen Einfluss auf die Regelung des betrachteten Stückguts 4ₙ haben.

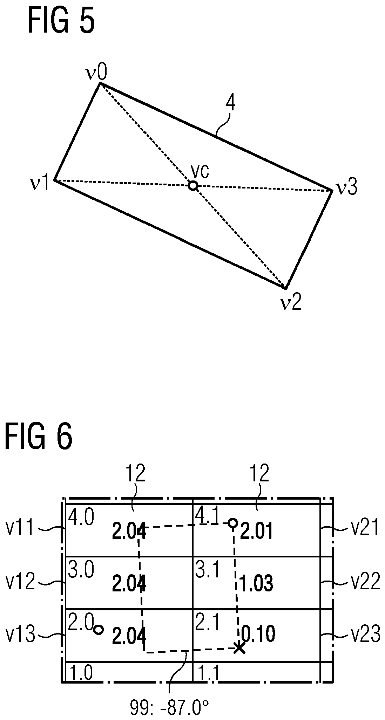

Um den Aktionsraum geeignet zu verkleinern wird für jedes Stückgut 4ₙ nur eine Teilmenge an Förderelementen 12 herangezogen. Dies ist grundsätzlich möglich, da aus Sicht eines einzelnen Stückguts 4ₙ zu einem Zeitpunkt t nicht alle Förderelemente 12 relevant sind, sondern nur eine Teilmenge der Förderelemente 12, insbesondere die, auf denen das Stückgut 4ₙ liegt. Je nach Größe und Ausrichtung des Stückguts 4ₙ und der Förderelemente 12 variiert jedoch die Zahl der relevanten Förderelemente 12. Für das maschinelle Lernen müssen jedoch die Aktionsvektoren aₙ(t) eine konstante Dimensionalität besitzen. Die Dimension der Aktionsvektoren aₙ(t) ist somit geringer als die Anzahl an Förderelementen 12 des gesamten Fördersystems 2 um eine Reduzierung der Dimensionalität des Gesamtproblems zu erzielen. Hierzu muss eine geeignete Abstraktion gefunden werden. Beispielsweise kann der Aktionsvektor aₙ(t) pro Stückgut 4ₙ so gewählt sein, dass er nur bestimmte Förderelemente 12 beinhaltet, z.B. die unter den Eckpunkten v₁, v₂, v₃, v₄ eines Stückguts 4 sowie unter dessen (geschätzten) Schwerpunkt v_{c}, (Figur 5). In Figur 6 wäre ein 5-dimensionaler Aktionsvektor aₙ(t) gegeben durch die Bandgeschwindigkeiten v₂₁, v₁₁ v₁₃, v₂₃ (2.01, 2.04, 2.04, 0.10) [m/s] unter den 4 Eckpunkten sowie durch die Bandgeschwindigkeit vₛ (2.04 m/s) unterhalb des Schwerpunkts.

Eine alternative Repräsentation des Aktionsvektors aₙ(t) wäre die Aufteilung der Grundfläche des Stückguts 4ₙ bzw. eines umschreibenden Rechtecks in eine feste Zahl von Zonen, wobei jede Zone durch eine Geschwindigkeit vᵢ beschrieben wird. Alternativ kann der Aktionsvektor aₙ(t) auch einen Geschwindigkeitsvektor des Stückguts 4ₙ beschreiben. Die Darstellung des Aktionsvektors aₙ(t) ist in jedem Fall unabhängig von den tatsächlichen Förderelementen 12, bestimmt aber im weiteren Verfahrensverlauf deren Ansteuerung.

Verfahren des bestärkenden Lernens verwenden eine Strategie-Funktion (Policy), die einen Zustandsvektor sₙ(t) abbildet auf einen Aktionsvektor aₙ(t) des Aktionsraums, d.h. die Strategiefunktion wählt geeignete Bandgeschwindigkeiten abhängig von der jeweiligen, in dem Zustandsvektor sₙ(t) abgebildeten Situation. Die Strategie-Funktion wird in der Regel durch ein maschinell gelerntes Modell (neuronales Netz, Gauß Prozess, Random Forrest, parametrierte Gleichungen etc.) repräsentiert. Das Abbilden des gewählten Aktionsvektors aₙ(t) auf die realen Förderelemente 12 beeinflusst den Folgezustand sₙ(t+Δt) des Stückguts. Um die Strategie zu trainieren, wird anhand des Folgezustands sₙ(t+Δt) eine Belohnung vergeben, anhand derer der Agent die Aktionsvektoren des Aktionsraums anpasst und somit die Strategie verbessert. Es ist möglich, zudem für einen Vergleich des Folgezustands sₙ(t+Δt) mit dem Anfangszustand sₙ(t) oder mit weiter zurückliegenden Zuständen sₙ(t-Δt), sₙ(t-2At),... eine Belohnung zu vergeben. Dieser isolierte Vergleich des Folgezustands mit dem vorherigen Zustand oder mit mehr als nur dem direkt vorhergehenden Zustand und/oder die isolierte Bewertung des Folgezustands sₙ(t+Δt) kombiniert mit einer mit Belohnungen quantifizierten Bewerten ermöglicht das Anpassen des Strategiemodells.

Das Strategiemodell wird also verbessert, so dass zukünftig für den Anfangszustand sₙ(t), noch passendere Aktionsvektoren aₙ(t) ausgewählt und auf das reale Fördersystem 2 abgebildet werden. Es ist jedoch auch möglich, die Strategie vorgängig mit einem realen oder virtuellen Fördersystem nach dem beschriebenen Vorgehen zu optimieren und während der Ansteuerung des Fördersystems 2 diese bereits vorbestimmte Strategie einfach auf die einzelnen Zustandsvektoren sₙ(t) anzuwenden.

Es ist somit einerseits möglich, die Strategie und somit die Auswahl der Aktionsvektoren aₙ(t) für jedes Stückgut 4, 4ₙ während des Betriebs der Anlage 2 zu optimieren (d.h. die Strategie lernt bzw. trainiert während der Durchführung des Verfahrens weiter dazu). Oder aber es kann die Strategie vorab anhand von Trainingsdaten (z.B. historische Daten des Betriebs der Anlage unter Anwendung der "Standardsteuerung"), mit derselben oder einer vergleichbaren Anlage 2 und anderer Stückgutbelegung oder mithilfe einer Simulation der Anlage 2 trainiert und vorbestimmt werden. Diese vorbestimmte Strategie kann einerseits als vorbestimmte "Anfangsstrategie" herangezogen werden und diese vorbestimmte Strategie wird dann während der Durchführung des Verfahrens weiter trainiert und somit optimiert. Oder aber diese vorbestimme Strategie wird ohne weiteres Optimieren einfach auf die in den Zustandsvektoren sₙ(t) abgebildeten Zustände der Stückgüter 4ₙ während der Laufzeit angewendet - die Strategie wird dann während der Laufzeit nicht mehr verändert.

Da die Ortskoordinaten des Stückguts 4 und der Förderelemente 12 bekannt sind, können die Zustände der Stückgüter 4 aus der realen Welt in Zustandsvektoren sₙ(t) der virtuellen Welt abgebildet werden. Für jedes Stückgut 4 individuell wird anhand seines Zustandsvektors sₙ(t) mit einer Strategie in der virtuellen Welt ein Aktionsvektor aₙ(t) ausgewählt. Dieser Aktionsvektor aₙ(t) kann wiederum zurück abgebildet werden auf die Förderelemente 12 des realen Fördersystems 2, so dass diese Förderelemente 12 mit den abgebildeten Geschwindigkeiten des Aktionsvektors aₙ(t) angesteuert werden, woraufhin das Stückgut 4 und das gesamte Fördersystem 2 in einen Folgezustand überführt wird. Jeweils nach Ablauf einer Taktzeit Δt wird dieser Vorgang anhand einer Belohnung bewertet, wodurch die Strategie verbessert wird. Dieser Vorgang wird für jedes Stückgut 4 im Bereich des Abbilds solange ausgeführt, bis das Stückgut 4 den Bereich des Abbilds verlassen hat.

Nach Ablauf jeder Taktzeit Δt, also im Wesentlichen zeitgleich mit dem Bestimmen der Geschwindigkeiten v derjenigen Förderelemente, auf die ein Aktionsvektor aₙ(t) abgebildet worden ist, werden die Geschwindigkeiten derjenigen Förderelemente 12 bestimmt, auf die aber der Aktionsvektor aₙ(t) nicht abgebildet wurde. Die Geschwindigkeiten dieser Förderelemente 12 werden bestimmt und gemäß dieser Bestimmung von der Regelungseinrichtung angesteuert.

Dies betrifft die Förderelemente 12, auf denen das Stückgut 4ₙ aufliegt aber auf die kein Aktionsvektor aₙ(t) dieses Stückguts 4ₙ abgebildet worden ist. Die Geschwindigkeiten v dieser Förderelemente 12 werden bestimmt über Interpolation, z.B. bilineare Interpolation, der Geschwindigkeiten v von denjenigen benachbarten Förderelementen 12, auf die ein Aktionsvektor aₙ(t) dieses Stückguts 4ₙ abgebildet worden ist.

Zudem betrifft dies diejenigen Förderelemente, auf denen sowohl kein Stückgut 4ₙ aufliegt als auch auf die kein Aktionsvektor aₙ(t) eines Stückguts 4ₙ abgebildet worden ist. Die Geschwindigkeiten v dieser Förderelemente 12 können nach einem der folgenden, auch miteinander kombinierbaren, Herangehensweisen bestimmt werden:
Über Interpolation der Geschwindigkeiten v von denjenigen benachbarten Förderelementen 12, auf die ein Aktionsvektor aₙ(t) eines Stückguts 4ₙ abgebildet worden ist. Für Rand-Förderelemente 12 können spezielle Randbedingungen angenommen werden. Die Geschwindigkeiten v werden bestimmt anhand von Geschwindigkeitsparametern des Fördersystems 2 (Standardwerte aus Installation oder Simulation, z.B. Mittelwert aller Aktionsvektor-Förderelemente). Die Geschwindigkeit v von den Förderelementen 12, auf deren benachbarten Förderelementen 12 der Aktionsvektors aₙ(t) eines Stückguts 4ₙ abgebildet worden ist, werden so gewählt, dass sie mit der Geschwindigkeit dieses benachbarten Förderelements 12 übereinstimmen. Potenzielle Konflikte können hierbei auftreten und können gelöst werden, indem z.B. eine Priorisierung und/oder gewichtete Mittelung vorgenommen wird. Die Geschwindigkeiten für einige oder alle dieser Förderelemente 12 können identisch sein und bestimmt werden aus dem Mittelwert der Geschwindigkeiten der Förderelemente 12, auf die ein Aktionsvektor aₙ(t) eines Stückguts 4ₙ abgebildet worden ist.

Ein wesentlicher Vorteil des erfindungsgemäßen Verfahrens ist, dass die Strategie aus Sicht jeweils eines Stückguts 4ₙ für alle zukünftigen Stückgüter 4 (und für zukünftige Zustände ebendieses Stückguts 4ₙ) trainiert und zudem als gemeinsame, geteilte Strategie für alle Stückgüter 4 verwendet wird. Das gleiche Strategie-Modell wird also auf jedes Stückgut 4, 4₁, 4ₙ angewandt und berechnet jeweils einen individuellen, lokalen Aktionsvektor a₁(t), aₙ(t) anhand des individuellen Zustandsvektors s₁(t), sₙ(t).

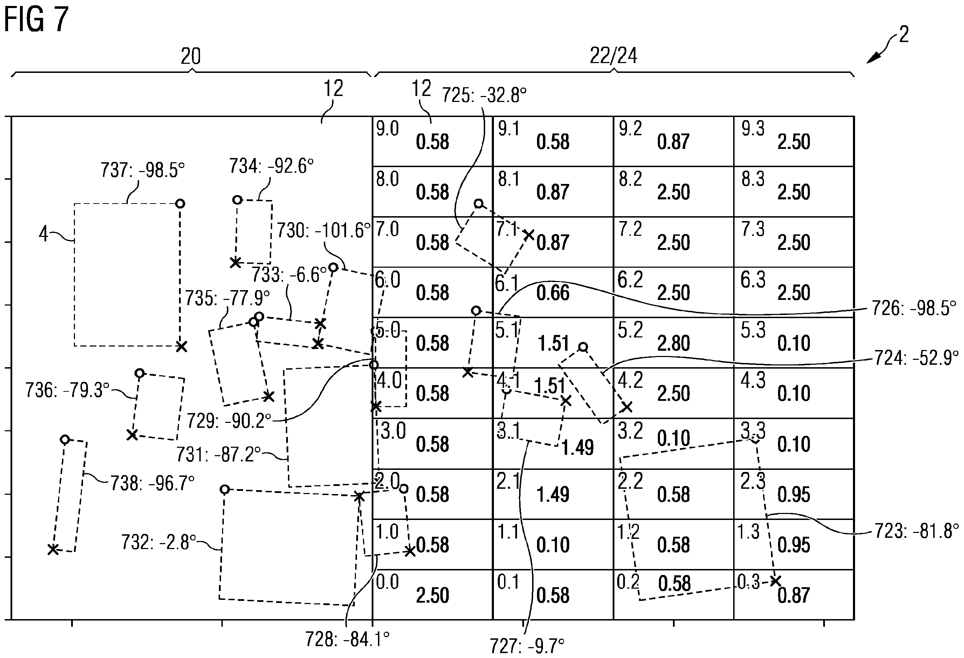

Die Aktionsvektoren a₁(t), aₙ(t) werden dann auf die realen Förderelemente 12 als globale Bandmatrix (umfassend alle Förderelemente 12) abgebildet. Zwischenliegende Förderelemente 12 bekommen geeignet interpolierte Werte (z.B. über bilineare Interpolation). Bei der Abbildung auf die reale Bandmatrix kann es zu Konflikten kommen, d.h. mehr als ein Paket 4 adressiert dasselbe Förderelemente 12. Diese Konflikte, von denen in Figur 7 mehrere gezeigt werden, werden aufgelöst, indem je nach Überlapp des Stückguts 4 mit dem Förderelement 12 und Paketzustand eine Priorisierung und/oder gewichtete Mittelung vorgenommen wird. Z.B. erhält ein Paket 4 mit wenig Überlapp ein geringes Gewicht der auf das Förderelement 12 projizierten Geschwindigkeit seines Aktionsvektors a(t) in der Mittelung. Eine entsprechende Logik kann über Expertenwissen vorgegeben werden oder auch maschinell gelernt werden. Der Überlapp jedes Stückguts 4 mit seinen Förderelementen 12 kann im Zustandsvektor sₙ(t) oder anderweitig abgebildet werden.

Das Training der Strategie-Funktion kann anhand von realen oder simulierten Daten erfolgen. Insbesondere kann das Training beim Kunden im Betrieb weiter fortgesetzt werden, was es ermöglicht, dass sich das Fördersystem an wechselnde Eigenschaften des Paketstroms (Größe, Gewicht, Form und Material der Pakete) automatisch adaptiert.

Gemäss einer Ausführungsform kann der Zustandsvektor sₙ(t) eines Stückguts 4ₙ eine oder mehrere der folgenden Informationen umfassen: Zustandsinformationen des betreffenden Pakets 4(und benachbarter Pakete 4') wie Positionen, Geschwindigkeiten, Ausrichtung, .... Globale Informationen über den Zustand des Fördersystems 2: Anzahl der Pakete 4, Durchschnittsgeschwindigkeit v, Priorisierung durch den Anwender, ....

### Bezugszeichenliste

- 2: Fördersystem
- 4: Stückgut
- 6: Förderrichtung
- 8: Förderstrecke
- 10: Segment
- 12: Fördermittel
- 18: Verbreiterungsvorrichtung
- 20: Überführungsfördermittel
- 22: Ausrichtungsabschnitt
- 24: Abstandskorrekturabschnitt
- 26: Sensor
- v: Geschwindigkeit
- a(t): Aktionsvektor
- s(t): Zustandsvektor
- Δt: Taktzeit

## Patentansprüche

1. Computerimplementiertes Verfahren zum Ansteuern einer Regelungseinrichtung eines Fördersystems (2) zum Transport von Stückgütern (4) mindestens einer Art, insbesondere Postsendungen und Gepäckstücke, wobei das Fördersystem (2) eine Mehrzahl entlang und parallel zu einer Förderrichtung (6) ausgerichtete Förderelemente (12) aufweist, die Förderelemente (12) unter Steuerung der Regelungseinrichtung von einem jeweils zugeordneten Antrieb mit individuell einstellbarer Geschwindigkeit v angetrieben werden, um eine Ausrichtung und/oder einen definierten Abstand der Stückgüter zu erzielen, **dadurch gekennzeichnet, dass** das Ansteuern der Regelungseinrichtung (14) bestimmt wird durch mindestens einen nach Methoden des bestärkenden Lernens handelnden oder vorbestimmten Agenten, welcher gemäß einer Strategie situativ für einen Ausgangszustand eine Aktion aus einem Aktionsraum wählt, um in einen Folgezustand zu gelangen, wobei die Zustände mit Zustandsvektoren -s (t), s(t+Δt)- und die Aktionen mit Aktionsvektoren -a(t), a(t+Δt)-abbildbar sind, umfassend die Verfahrensschritte:
a) Erstellen eines Ausgangsabbilds des Fördersystems (2);
b) für jedes der Stückgüter (4ₙ) auf dem Abbild individuelles Erstellen eines Zustandsvektors sₙ(t) vorab festgelegter und für alle Stückgüter (4, 4ₙ) einer Art gleicher Dimension, umfassend dem unmittelbar zuvor erstellten Abbild entnommene Zustandsinformationen des betreffenden Stückguts (4ₙ);
c) für jedes Stückgut (4ₙ) individuelles Auswählen eines Aktionsvektors aₙ (t) aus einem Aktionsraum gemäß der für alle Stückgüter (4) einer Art gleichen Strategie für den aktuellen Zustandsvektor sₙ (t) dieses Stückguts (4ₙ), wobei die Dimension des Aktionsvektors aₙ (t) vorbestimmt ist;
d) für jedes Stückgut (4ₙ) Abbilden des Aktionsvektors aₙ (t) auf die realen Förderelemente (12) dieses Stückguts (4ₙ), um die Geschwindigkeit v dieser Förderelemente (12) zu bestimmen, und entsprechende Ansteuerung der Förderelemente (12) mit der Regelungseinrichtung;
e) nach Ablauf einer Taktzeit Δt Erstellen eines Folgeabbilds des Fördersystems (2) und Durchführen von Verfahrensschritt b) um für jedes Stückgut (4ₙ) einen Zustandsvektor des Folgezustands sₙ(t+Δt) zu erhalten;
f) falls die Strategie für Stückgüter (4) einer Art während der Durchführung des Verfahrens weiter trainiert werden soll wird für jedes Stückgut (4ₙ) dieser Art durch eine Methode des bestärkenden Lernens der Zustandsvektors des Folgezustands sₙ (t+Δt) anhand einer Belohnung bewertet, woraufhin der Agent seine Strategie für Stückgüter (4) dieser Art trainiert und somit optimiert, indem er die Aktionsvektoren aₙ(t) des Aktionsraums anpasst;
g) für jedes Stückgut (4ₙ) erneutes Durchführen der Verfahrensschritte c) - f) unter Heranziehen der verbesserten oder vorbestimmten Strategie solange das betreffende Stückgut (4ₙ) auf dem Folgeabbild abgebildet ist.

2. Verfahren nach Anspruch 1, zudem umfassend den Verfahrensschritt Zuordnen der Stückgüter (4, 4') auf dem Abbild zu einer ersten und mindestens einer weiteren Art in Abhängigkeit von Eigenschaften der Stückgüter (4 4') und für jede zugeordnete Art Bereitstellen eines Agenten mit einer Strategie für Stückgüter (4, 4') dieser Art.

3. Verfahren nach einem der Ansprüche 1 oder 2, zudem umfassend den Verfahrensschritt für jede Taktzeit Δt und für jedes Stückgut (4ₙ) Bestimmen der Geschwindigkeiten v derjenigen Förderelemente (12), auf denen das Stückgut (4ₙ) aufliegt aber auf die kein Aktionsvektor aₙ(t) dieses Stückguts (4ₙ) abgebildet worden ist, und entsprechende individuelle Ansteuerung ebendieser Förderelemente (12) mit der Regelungseinrichtung, wobei die Geschwindigkeiten v bestimmt werden über Interpolation der Geschwindigkeiten v von denjenigen benachbarten Förderelementen (12), auf die ein Aktionsvektor ^{a}ₙ (t) dieses Stückguts (4ₙ) abgebildet worden ist.

4. Verfahren nach einem der Ansprüche 1 oder 3, zudem umfassend den Verfahrensschritt für jede Taktzeit Δt Bestimmen der Geschwindigkeiten v aller derjenigen Förderelemente (12), auf denen sowohl kein Stückgut (4) aufliegt, als auch auf die kein Aktionsvektor aₙ (t) eines Stückguts (4) abgebildet worden ist, und entsprechende individuelle Ansteuerung ebendieser Förderelemente (12) mit der Regelungseinrichtung, wobei
- die Geschwindigkeiten v bestimmt werden über Interpolation der Geschwindigkeiten v von denjenigen benachbarten Förderelementen (12), auf die ein Aktionsvektor aₙ(t) eines Stückguts (4ₙ) abgebildet worden ist; und/oder
- die Geschwindigkeiten v bestimmt werden anhand von Geschwindigkeitsparametern des Fördersystems (2); und/oder
- die Geschwindigkeit v von den Förderelementen (12), auf deren benachbarten Förderelementen (12) der Aktionsvektors aₙ (t) eines Stückguts (4ₙ) abgebildet worden ist, so gewählt werden, dass sie mit der Geschwindigkeit dieses benachbarten Förderelements (12) übereinstimmen; und/oder
- die Geschwindigkeiten für einige oder alle dieser Förderelemente (12) identisch sind und bestimmt werden aus dem Mittelwert der Geschwindigkeiten der Förderelemente (12), auf die ein Aktionsvektor ^{a}ₙ (t) eines Stückguts (4ₙ) abgebildet worden ist.

5. Verfahren nach einem der Ansprüche 1 bis 4, **dadurch gekennzeichnet, dass**
die in dem Zustandsvektor sn(t) abgebildeten Zustandsinformationen eines Stückguts (4ₙ) umfassen Position und/oder Ausrichtung des Stückguts (4ₙ).

6. Verfahren nach einem der Ansprüche 1 bis 5, **dadurch gekennzeichnet, dass**
die in dem Zustandsvektor sₙ(t) oder anderweitig abgebildeten Zustandsinformationen eines Stückguts (4) umfassen
- Überlapp des Stückguts (4) mit denjenigen Förderelementen (12), auf denen das Stückgut (4) aufliegt; und/oder
- Zustandsinformationen einer vorbestimmten Anzahl nächster benachbarter Stückgüter (4) innerhalb eines vorbestimmten Abstands, zumindest umfassend deren Position und/oder Abstand zum Stückgut (4) des Zustandsvektors sₙ(t), wobei bei einer geringeren Anzahl als der vorbestimmten Anzahl nächster benachbarter Stückgüter (4') der Zustandsvektor sₙ(t) mit Standardwerten belegt wird; und/oder
- Geschwindigkeit und/oder Größe des Stückguts (4); und/oder
- globale Zustandsinformationen des Fördersystems (2), beispielsweise umfassend eine Anzahl Stückgüter (4) auf dem Fördersystem (2), Durchschnittsgeschwindigkeit des Fördersystems (2), Priorisierung einzelner Stückgüter (4), beispielsweise anhand von Größe und/oder Sortierkriterium.

7. Verfahren nach einem der Ansprüche 1 bis 6, **dadurch gekennzeichnet, dass** der Aktionsvektor ^{a}ₙ (t) nur Geschwindigkeiten beschreibt,
die unter vorbestimmten Punkten oder Flächenbereichen des Stückguts (4) liegen.

8. Verfahren nach einem der Ansprüche 1 bis 7, **dadurch gekennzeichnet, dass**
wenn die zwei oder mehr Stückgütern (4, 4') zugeordneten Aktionsvektoren ^{a}ₙ (t), a_{n'}(t) auf dasselbe Förderelemente (12) abgebildet werden, wird in Abhängigkeit vom jeweiligen Überlapp dieser Stückgüter (4) mit diesem Förderelement (12) und/oder von einer Güte der Zustandsvektoren ^{s}ₙ (t) eine Priorisierung und/oder eine gewichtete Mittelung der von den Aktionsvektoren aₙ (t), a_{n'}(t) vorgegebenen Geschwindigkeiten durchgeführt; und/oder
wenn zwei Elemente des Aktionsvektors ^{a}ₙ J (t) eines Stückguts (4ₙ) auf dasselbe Förderelemente (12) abgebildet werden, wird dieses Förderelement (12) mit einem Mittelwert dieser Elemente angesteuert oder eines der Elemente wird vollumfänglich oder gewichtet bevorzugt.

9. Verfahren nach einem der Ansprüche 1 bis 8, **dadurch gekennzeichnet, dass**
das Abbild mit Bildverarbeitungsmethoden ausgewertet wird und die Zustandsvektoren sₙ (t) basierend auf dem ausgewerteten Abbild erstellt werden.

10. Verfahren nach einem der Ansprüche 1 bis 9, **dadurch gekennzeichnet, dass**
ein erster Erstellversuch der Zustandsvektoren sₙ(t) automatisch mittels Deep Reinforcement Learning aus dem Abbild erfolgt.

11. Verfahren nach einem der Ansprüche 1 bis 10, zudem umfassend den Verfahrensschritt
Trainieren der Strategie des Agenten für Stückgüter (4) einer Art mit einem virtuellen oder realem Fördersystem (2', 2).

12. Vorrichtung zur Datenverarbeitung für eine computer-implementierten Ansteuerung einer Regelungseinrichtung eines Fördersystems (2) zum Transport von Stückgütern (4) mindestens einer Art, insbesondere Postsendungen und Gepäckstücke, wobei das Fördersystem (2) eine Mehrzahl entlang und parallel zu einer Förderrichtung (6) ausgerichtete Förderelemente (12) aufweist, wobei die Förderelemente (12) unter Steuerung der Regelungseinrichtung von einem jeweils zugeordneten Antrieb mit individuell einstellbarer Geschwindigkeit angetrieben werden, um eine Ausrichtung und/oder einen definierten Abstand der Stückgüter zu erzielen, wobei das Ansteuern der Regelungseinrichtung bestimmt wird durch mindestens einen nach Methoden des bestärkenden Lernens handelnden Agenten, welcher gemäß einer Strategie für Stückgüter (4) einer Art situativ für einen Ausgangszustand eine Aktion aus einem Aktionsraum wählt, um in einen Folgezustand zu gelangen, wobei die Zustände mit Zustandsvektoren und die Aktionen mit Aktionsvektoren abbildbar sind, wobei die Stückgüter auf dem Fördersystem (2) von mindestens einem Sensor (26) erfassbar sind und die Regelungseinrichtung eine Recheneinheit umfasst; **gekennzeichnet durch** Mittel zur Durchführung des Verfahrens nach Anspruch 1.

13. Vorrichtung nach Anspruch 12, **dadurch gekennzeichnet, dass**
die Vorrichtung ausgestaltet ist zur Durchführung des Verfahrens nach einem der Ansprüche 2 bis 11.

14. Fördersystem (2) zum Transport von Stückgütern (4) mindestens einer Art, insbesondere Postsendungen und Gepäckstücke, wobei das Fördersystem (2) eine Mehrzahl entlang und parallel zu einer Förderrichtung (6) ausgerichtete Förderelemente (12) aufweist, wobei die Förderelemente (12) unter Steuerung einer Regelungseinrichtung von einem jeweils zugeordneten Antrieb mit individuell einstellbarer Geschwindigkeit angetrieben werden, um eine Ausrichtung und/oder einen definierten Abstand der Stückgüter zu erzielen, wobei das Ansteuern der Regelungseinrichtung bestimmt wird durch mindestens einen nach Methoden des bestärkenden Lernens handelnden Agenten, welcher gemäß einer für alle Stückgüter (4) einer Art gleichen Strategie situativ für einen Ausgangszustand eine Aktion aus einem Aktionsraum wählt, um in einen Folgezustand zu gelangen, wobei die Zustände mit Zustandsvektoren und die Aktionen mit Aktionsvektoren abbildbar sind, wobei das Fördersystem (2) eine Vorrichtung nach Anspruch 12 oder 13 umfasst.

15. Computerprogramm umfassend Befehle, die bei der Ausführung durch eine mit einem Fördersystem (2) nach Anspruch 14 verbundene Recheneinheit diese veranlassen, das Verfahren nach einem der Ansprüche 1 bis 11 auszuführen.

## Claims

1. Computer-implemented method for controlling a regulating device of a conveyor system (2) for the transport of piece goods (4) of at least one type, in particular mail items and pieces of luggage, the conveyor system (2) having a plurality of conveyor elements (12) aligned along and parallel to a conveying direction (6), the conveyor elements (12) being driven, under the control of the control device, by a respectively assigned drive at an individually adjustable speed v in order to achieve an alignment of the conveyor elements (12) with respect to the conveying direction (6) drive assigned in each case at an individually adjustable speed v in order to achieve an alignment and/or a defined distance and/or a defined spacing of the piece goods, **characterized in that**
the control of the regulating device (14) is determined by at least one is determined by at least one operator acting or learning methods, which agent, in accordance with a strategy, situationally selects an action from an action space for an initial state in order to reach a subsequent state, the states being defined with state vectors -s (t), s (t+ Δt) - and the actions with action vectors -a (t), a (t+ Δt) - can be mapped, comprising the method steps:
a) creating an output image of the conveyor system (2);
b) for each of the unit loads (4ₙ) on the image, individually creating a state vector sₙ(t) of predefined dimension and of the same dimension for all unit loads (4, 4ₙ) of one type, comprising the immediately
comprising state information of the respective piece goods (4ₙ) taken from the immediately previously created image;
c) for each piece (4ₙ) individually selecting an action vector aₙ (t) from an action space in accordance with the strategy, which is the same for all pieces (4) of a kind, for the
current state vector sₙ (t) of this piece good (4ₙ), the dimension of the action vector aₙ (t) being predetermined;
d) for each piece goods (4ₙ) mapping the action vector aₙ (t) onto the real conveying elements (12) of this piece goods
(4ₙ), in order to determine the velocity v of these conveying elements (12) and to and corresponding control of the conveying elements (12) with the control device;
e) after a cycle time Δt has elapsed, producing a sequential image of the conveying system image of the conveyor system (2) and carrying out method step b) in order to obtain a state vector of the subsequent state sₙ (t+ Δt) for each piece goods (4ₙ);
f) if the strategy for piece goods (4) of one kind is to be trained further during the execution of the method the state vector of the subsequent state sₙ (t+ Δt) is determined for each piece (4ₙ) of this type by a method of reinforcement learning. (t+ Δt) is evaluated for each item (4ₙ) of this kind by a method of reinforcement learning, whereupon the agent trains and thus optimizes its strategy for items (4) of this kind, by adjusting the action vectors to (t) of the action space;
g) for each unit load (4ₙ), re-executing the procedure steps c) - f) using the improved or predetermined strategy as long as the unit load (4ₙ) in question is mapped on the subsequent image.

2. Method according to claim 1, further comprising the step of
assigning the piece goods (4, 4') on the image to a first and at least
and at least one further type as a function of properties of the piece goods (4, 4'). properties of the piece goods (4, 4') and for each assigned type providing an agent with a strategy for piece goods (4, 4') of this type.

3. A process according to one of claims 1 or 2, further comprising the step of comprising the step of
for each cycle time Δt and for each piece of material (4ₙ), determining the speeds v of those conveying elements (12) on which
on which the piece goods (4ₙ) rest but on which no action is taken.
vector aₙ(t) of this piece goods (4ₙ) has been mapped, and corresponding individual control of precisely these conveying elements (12) with the control device, wherein the speeds v of the conveying elements (12) are determined.
speeds v are determined by interpolation of the speeds v of those adjacent conveyor elements (12) onto which an action vector (4ₙ) has been mapped.

4. A process according to one of claims 1 or 3, further comprising the step of comprising the method step
determining, for each cycle time Δt, the velocities v of all those conveying elements (12) on which both no piece goods (4) rest and on which no action vector aₙ (t) of a piece of material (4) has been mapped onto, and accordingly corresponding individual control of precisely these conveying elements (12) with the control device, wherein
- the speeds v are determined via interpolation of the speeds v on of the velocities v
of those adjacent conveying
elements (12) to which an action vector aₙ(t) of
piece goods (4ₙ) has been mapped; and/or
- the speeds v are determined on the basis of speed parameters of the conveyor system (2); and/or
- the velocity v of the conveying elements (12), on which
whose adjacent conveying elements (12) the action vector
aₙ (t) of a piece of material (4ₙ) has been mapped onto the adjacent conveying elements (12) of said conveying elements (12) are chosen to correspond to the speed of said adjacent conveying element (12); and/or
- the speeds for some or all of these conveying elements (12) are identical.
elements (12) are identical and are determined from the
mean value of the velocities of the conveying elements (12) onto which an action vector aₙ (t) of a piece of material (4ₙ) has been mapped.
has been mapped.

5. Method according to any one of claims 1 to 4, **characterized in that** the state information mapped in the state vector sₙ (t) comprises position information of a piece of material (4ₙ) comprise position and/or orientation of the piece of material (4ₙ).

6. Method according to any one of claims 1 to 5, **characterized in that** the state information mapped in the state vector sₙ (t) or otherwise comprises information about the state of a piece of material (4) comprises
- overlap of the piece goods (4) with those conveying elements (12) on which the piece goods (4) rest; and/or
- status information of a predetermined number of next adjacent piece goods (4) within a predetermined distance from the conveyor elements (12); and/or distance, at least comprising their position and/or distance to the piece goods (4) of the state vector sₙ (t)
whereby in the case of a number of nearest neighboring piece goods (4'), the state vector sₙ(t) is assigned default values; and/or
- speed and/or size of the piece goods (4); and/or
- global status information of the conveyor system (2), for example comprising a number of unit loads (4) on the conveyor system (2), average speed of the conveyor system (2), prioritization of individual unit loads (4), for example on the basis of size and/or sorting criteria; and/or on the basis of size and/or sorting criterion.

7. Method according to one of claims 1 to 6, **characterized in that**
the action vector aₙ (t) only describes velocities which lie below predetermined points or surface areas of the piece goods (4).

8. Method according to any one of claims 1 to 7, **characterized in that** if the acquisition vectors aₙ (t), aₙ, (t) associated with two or more piece goods (4, 4') are mapped onto the same conveying element (12) are mapped onto the same conveying element (12), depending on the respective overlap of these piece goods (4) with this conveying element (12), the following is done and/or on a quality of the state vectors sₙ (t), a prioritization and/or a weighted averaging of the speeds specified by the action vectors aₙ (t), a_{n'} (t) is carried out; and/or is performed; and/or if two elements of the action vector an (t) of a piece goods (4ₙ) are mapped onto the same conveying element (12), this conveying element (12) is controlled with an average value of these elements or one of the elements is given full or weighted preference.

9. Method according to any one of claims 1 to 8, **characterized in that**
the image is evaluated with image processing methods and the state vectors sₙ (t) are created based on the evaluated image.

10. Method according to any one of claims 1 to 9, **characterized in that**
a first attempt to create the state vectors sₙ(t) is performed automatically by means of deep reinforcement learning from the image is performed.

11. Method according to any one of claims 1 to 10, further comprising the step Of training the strategy of the agent for piece goods (4) of a type with a virtual or real conveyor system (2', 2).

12. Data processing device for computer-implemented control of a control device of a conveyor system (2) for transporting unit loads (4) of at least one type, in particular mail items and pieces of luggage, the conveyor system (2) having a plurality of conveyor elements (12) aligned along and parallel to a conveying direction (6), the conveyor elements (12), under the control of the control device, the conveying elements (12) being driven by a respectively associated drive at an individually adjustable speed in order to achieve an alignment and/or a defined spacing of the piece goods, the control of the control device being determined by at least one control signal generated according to 10 methods of reinforcement learning. Methods of reinforcement learning, which agent, in accordance with a strategy for unit loads (4) of a type, situationally selects an action from an action space for an initial state in order to reach a subsequent state, wherein the states can be represented with state vectors and the actions with action vectors, wherein the action vectors can be represented with action vectors, wherein the action vectors can be represented with action vectors, wherein the action vectors can be represented with action vectors, wherein the action vectors can be represented with action vectors, wherein the action vectors, wherein the unit loads on the conveyor system (2) are detected by at least one system (2) can be detected by at least one sensor (26) and the control device comprises a computing unit; **characterized by** means for carrying out the method according to claim 1.

13. Device according to claim 12, **characterized in that**
the device is designed to carry out the method according to one of according to one of claims 2 to 11.

14. Conveyor system (2) for transporting piece goods (4) of at least one type, in particular mail items and luggage, the conveyor system (2) having a plurality of conveyor elements (12) aligned along and parallel to a conveying direction (6), the conveyor elements (12) being driven under the control of a regulating device by a respectively assigned drive at an individually adjustable speed in order to achieve an alignment and/or a defined spacing of the piece goods, the control of the regulating device being determined by a control device. Control of a regulating device by a respectively assigned drive with individually adjustable speed, in order to achieve an alignment and/or a defined spacing of the piece goods, the control of the regulating device being determined by at least one of the following an agent acting according to methods of reinforcement learning, which, in accordance with a strategy that is the same for all unit loads (4) of one type an action from an action space for an initial state in order to reach a subsequent state, the state being determined by at least one state, whereby the states can be represented by state vectors and the actions by action vectors, wherein the conveyor system (2) is a device according to claim 12 or 13.

15. A computer program comprising instructions which, when executed by a computing unit connected to a conveyor system (2) according to claim 14, cause the computing unit to execute the method according to any one of claims 1 to 11.

## Revendications

1. Procédé mis en oeuvre par ordinateur pour piloter un dispositif de régulation d'un système de transport (2) destiné à transporter des articles (4) d'au moins un type, en particulier des envois postaux et des bagages, le système de transport (2) comprenant une pluralité d'éléments de transport (12) orientés le long et parallèlement à une direction de transport (6), les éléments de transport (12) étant entraînés, sous la commande du dispositif de régulation, par un entraînement associé respectif à une vitesse (v) réglable individuellement, afin d'obtenir une orientation et/ou une distance définie des articles,
**caractérisé en ce que**
le pilotage du dispositif de régulation (14) est déterminé par au moins un agent agissant ou prédéterminé selon des méthodes d'apprentissage par renforcement, qui, conformément à une stratégie, sélectionne en fonction de la situation, pour un état initial, une action à partir d'un espace d'action, afin de parvenir à un état suivant, les états pouvant être représentés par des vecteurs d'état -s(t), s(t+ Δt) et les actions pouvant être représentées par des vecteurs d'action -a(t), a(t+ Δt), comprenant les étapes consistant à :
a) créer une image initiale du système de transport (2) ;
b) pour chacun des articles (4n) sur l'image, créer individuellement un vecteur d'état sn(t) de dimension définie préalablement et identique pour tous les articles (4, 4n) d'un même type, comprenant des informations d'état de l'article (4n) correspondant prélevées sur l'image créée immédiatement auparavant ;
c) pour chaque article (4n), sélectionner individuellement un vecteur d'action an(t) à partir d'un espace d'action, selon la stratégie identique pour tous les articles (4) d'un même type, pour le vecteur d'état actuel sn(t) de cet article (4n), la dimension du vecteur d'action an(t) étant prédéterminée ;
d) pour chaque article (4n), représenter le vecteur d'action an(t) sur les éléments de transport réels (12) dudit article (4n), afin de déterminer la vitesse v desdits éléments de transport (12), et piloter en correspondance les éléments de transport (12) au moyen du dispositif de régulation ;
e) après écoulement d'un temps de cycle Δt, créer une image suivante du système de transport (2) et exécuter l'étape b) du procédé, afin d'obtenir, pour chaque article (4n), un vecteur d'état de l'état suivant sn(t+ Δt) ;
f) si la stratégie pour les articles (4) d'un même type doit être entraînée davantage pendant la mise en oeuvre du procédé, pour chaque article (4n) dudit type, évaluer le vecteur d'état de l'état suivant sn(t+ Δt) par une méthode d'apprentissage par renforcement à l'aide d'une récompense, après quoi l'agent entraîne et donc optimise sa stratégie pour les articles (4) dudit type en adaptant les vecteurs d'action an (t) de l'espace d'action ;
g) pour chaque article (4n), exécuter une nouvelle fois les étapes c) à f) du procédé, en utilisant la stratégie améliorée ou prédéterminée tant que l'article (4n) correspondant est représenté sur l'image suivante.

2. Procédé selon la revendication 1,
comprenant en outre l'étape consistant à
affecter les articles (4, 4') sur l'image à un premier type et à au moins un autre type en fonction des propriétés des articles (4, 4') et, pour chaque type affecté, mettre à disposition un agent avec une stratégie pour les articles (4, 4') dudit type.

3. Procédé selon l'une des revendications 1 ou 2,
comprenant en outre l'étape consistant à
pour chaque temps de cycle Δt pour chaque article (4n), déterminer les vitesses v des éléments de transport (12) sur lesquels repose l'article (4n) mais sur lesquels aucun vecteur d'action an(t) dudit article (4n) n'a été représenté, et piloter individuellement en correspondance ces mêmes éléments de transport (12) au moyen du dispositif de régulation, les vitesses v étant déterminées par interpolation des vitesses v des éléments de transport (12) voisins sur lesquels un vecteur d'action an(t) dudit article (4n) a été représenté.

4. Procédé selon l'une des revendications 1 ou 3,
comprenant en outre l'étape consistant à
pour chaque temps de cycle Δt, déterminer les vitesses v de tous les éléments de transport (12) sur lesquels à la fois aucun article (4) ne repose et sur lesquels aucun vecteur d'action an(t) d'un article (4) n'a été représenté, et piloter individuellement en correspondance ces mêmes éléments de transport (12) au moyen du dispositif de régulation,
dans lequel
- les vitesses v sont déterminées par interpolation des vitesses v des éléments de transport (12) voisins sur lesquels un vecteur d'action an(t) d'un article (4n) a été représenté ; et/ou
- les vitesses v sont déterminées à l'aide de paramètres de vitesse du système de transport (2) ; et/ou
- les vitesses v des éléments de transport (12) sur les éléments de transport (12) voisins desquels le vecteur d'action an(t) d'un article (4n) a été représenté, sont choisies de manière à coïncider avec la vitesse dudit élément de transport (12) voisin ; et/ou
- les vitesses sont identiques pour certains ou tous ces éléments de transport (12) et sont déterminées à partir de la moyenne des vitesses des éléments de transport (12) sur lesquels un vecteur d'action an(t) d'un article (4n) a été représenté.

5. Procédé selon l'une des revendications 1 à 4,
**caractérisé en ce que**
les informations d'état d'un article (4n) représentées dans le vecteur d'état sn(t) comprennent la position et/ou l'orientation de l'article (4n).

6. Procédé selon l'une des revendications 1 à 5,
**caractérisé en ce que**
les informations d'état d'un article (4) représentées dans le vecteur d'état sn(t) ou représentées autrement comprennent
- le chevauchement de l'article (4) avec les éléments de transport (12) sur lesquels l'article (4) repose ; et/ou
- des informations d'état d'un nombre prédéterminé d'articles voisins (4) les plus proches à l'intérieur d'une distance prédéterminée, comprenant au moins leur position et/ou leur distance par rapport à l'article (4) du vecteur d'état sn(t), sachant que, dans le cas d'un nombre inférieur au nombre prédéterminé d'articles voisins (4') les plus proches, le vecteur d'état sn(t) est affecté de valeurs standard ; et/ou
- la vitesse et/ou la taille de l'article (4) ; et/ou
- des informations d'état globales du système de transport (2), comprenant par exemple un nombre d'articles (4) sur le système de transport (2), une vitesse moyenne du système de transport (2), une priorisation d'articles individuels (4), par exemple en fonction de leur taille et/ou d'un critère de tri.

7. Procédé selon l'une des revendications 1 à 6,
**caractérisé en ce que**
le vecteur d'action an(t) décrit uniquement des vitesses qui se situent en dessous de points ou de zones de surface prédéterminés de l'article (4).

8. Procédé selon l'une des revendications 1 à 7,
**caractérisé en ce que**
lorsque les vecteurs d'action an(t), an'(t) affectés à deux ou à plusieurs articles (4, 4') sont représentés sur le même élément de transport (12), une priorisation et/ou une moyenne pondérée des vitesses prescrites par les vecteurs d'action an(t), an'(t) est effectuée en fonction du chevauchement respectif desdits articles (4) avec ledit élément de transport (12) et/ou d'une qualité des vecteurs d'état sn(t)) ; et/ou
lorsque deux éléments du vecteur d'action an(t) d'un article (4n) sont représentés sur le même élément de transport (12), ledit élément de transport (12) est piloté avec une valeur moyenne desdits éléments, ou l'un des éléments est priorisé en totalité ou de manière pondérée.

9. Procédé selon l'une des revendications 1 à 8,
**caractérisé en ce que**
l'image est évaluée par des méthodes de traitement d'image, et les vecteurs d'état sn(t) sont créés sur la base de l'image évaluée.

10. Procédé selon l'une des revendications 1 à 9,
**caractérisé en ce que**
une première tentative de création des vecteurs d'état sn(t) est effectuée automatiquement à partir de l'image au moyen de l'apprentissage par renforcement en profondeur (deep reinforcement learning).

11. Procédé selon l'une des revendications 1 à 10,
comprenant en outre l'étape consistant à
entraîner la stratégie de l'agent pour des articles (4) d'un même type avec un système de transport virtuel ou réel (2', 2).

12. Dispositif de traitement de données pour un pilotage mis en oeuvre par ordinateur d'un dispositif de régulation d'un système de transport (2) destiné à transporter des articles (4) d'au moins un type, en particulier des envois postaux et des bagages, le système de transport (2) comprenant une pluralité d'éléments de transport (12) orientés le long et parallèlement à une direction de transport (6), les éléments de transport (12) étant entraînés, sous la commande du dispositif de régulation, par un entraînement associé respectif à une vitesse réglable individuellement, afin d'obtenir une orientation et/ou une distance définie des articles, le pilotage du dispositif de régulation étant déterminé par au moins un agent agissant selon des méthodes d'apprentissage par renforcement, qui, conformément à une stratégie pour des articles (4) d'un même type, sélectionne en fonction de la situation, pour un état initial, une action à partir d'un espace d'action, afin de parvenir à un état suivant, les états pouvant être représentés par des vecteurs d'état et les actions pouvant être représentées par des vecteurs d'action, les articles sur le système de transport (2) pouvant être détectés par au moins un capteur (26), et le dispositif de régulation comprenant une unité de calcul ;
**caractérisé par**
des moyens de mise en oeuvre du procédé selon la revendication 1.

13. Dispositif selon la revendication 12,
**caractérisé en ce que**
le dispositif est conçu pour mettre en oeuvre le procédé selon l'une des revendications 2 à 11.

14. Système de transport (2) destiné à transporter des articles (4) d'au moins un type, en particulier des envois postaux et des bagages, le système de transport (2) comprenant une pluralité d'éléments de transport (12) orientés le long et parallèlement à une direction de transport (6), les éléments de transport (12) étant entraînés, sous la commande d'un dispositif de régulation, par un entraînement associé respectif à une vitesse réglable individuellement, afin d'obtenir une orientation et/ou une distance définie des articles, le pilotage du dispositif de régulation étant déterminé par au moins un agent agissant selon des méthodes d'apprentissage par renforcement, qui, conformément à une stratégie identique pour tous les articles (4) d'un même type, sélectionne en fonction de la situation, pour un état initial, une action à partir d'un espace d'action, afin de parvenir à un état suivant, les états pouvant être représentés par des vecteurs d'état et les actions pouvant être représentées par des vecteurs d'action, le système de transport (2) comprenant un dispositif selon la revendication 12 ou 13.

15. Programme d'ordinateur comprenant des instructions qui, lorsqu'elles sont exécutées par une unité de calcul reliée à un système de transport (2) selon la revendication 14, amènent cette dernière à mettre en oeuvre le procédé selon l'une des revendications 1 à 11.
